# EUROPÄISCHE PATENTSCHRIFT

(11) **EP 0 714 509 B1**
(45) Veröffentlichungstag und Bekanntmachung des Hinweises auf die Patenterteilung: **02.01.2003**
(21) Anmeldenummer: 95920756.4
(22) Anmeldetag: 03.06.1995
(51) Int. Cl.: G01N 27/407

(54) **ELEKTROCHEMISCHER MESSFÜHLER**
ELECTROCHEMICAL SENSOR PROBE
SONDE ELECTROCHIMIQUE

(30) Priorität: 16.06.1994 DE 9409684 U
(43) Veröffentlichungstag der Anmeldung: 05.06.1996
(73) Patentinhaber: ROBERT BOSCH GMBH, 70442 Stuttgart (DE)
(72) Erfinder: WEYL, Helmut, D-71701 Schwieberdingen (DE); FRIES, Romuald, D-71287 Weissach (DE); JANSING, Peter, D-71272 Renningen (DE)
(86) Internationale Anmeldenummer: DE9500730
(87) Internationale Veröffentlichungsnummer: WO95034809

(56) Entgegenhaltungen:
- EP-A- 0 415 007
- EP-A- 0 520 528
- WO-A-92/08127
- DE-A- 4 312 506
- US-A- 3 960 693
- US-A- 4 145 272

## Beschreibung

### Stand der Technik

Die Erfindung geht aus von einem elektrochemischen Meßfühler nach der Gattung des Hauptanspruchs. Elektrochemische Meßfühler sind beispielsweise mit einem Sensorelement in der sogenannten Fingerbauform ausgeführt, bei der ein Festelektrolytkörper als geschlossenes Rohr in einem metallischen Gehäuse dicht festgelegt ist. Bei den Fingersonden unterscheidet man zwischen den potentialfreien und den potentialgebundenen Meßfühlern. Bei den potentialgebundenen Meßfühlern sind die Leiterbahnen der äußere Elektrode mittels eines elektrisch leitenden Dichtrings mit dem Gehäuse kontaktiert. Bei den potentialfreien Meßfühlern wird jeder Elektrodenanschluß direkt einem Steuergerät zugeführt, so daß keine elektrische Kontaktierung mit dem Gehäuse erlaubt ist. Eine Dichtung zwischen Festelektrolytkörper und Gehäuse muß in beiden Fällen realisiert sein.

Insbesondere die potentialfreien Meßfühler, bei denen für jeden Elektrodenanschluß ein Kontakt auf der Ringfläche des Festelektrolytkörpers angebracht ist, erfordern eine lagerichtige Montage der Kontaktteils. Es besteht nämlich die Gefahr, daß bei der Montage des Meßfühlers der Festelektrolytkörper nach dem Einsetzen sich verdreht und damit die Kontakte der Elektroden eine andere Lage erhalten, wodurch keine sichere Kontaktierung möglich ist.

Zur Dichtung des Festelektrolytkörpers im Gehäuse wird beispielsweise ein metallischer Dichtring eingesetzt, wobei bei einem potentialfreien Meßfühler die Leiterbahn zur äußeren Elektrode im Bereich des metallischen Dichtrings mit einer elektrischen Isolierung abgedeckt sein muß.

Aus der US 4,019,974 ist ein elektrochemischer Sensor zum Nachweis des Sauerstoffgehaltes von Abgasen bekannt, der ein in ein Gehäuse eingesetztes Sensorelement aufweist. Das Sensorelement besteht aus einem Sauerstoffionen leitenden Festelektrolytkörper in Form eines einseitig geschlossenen Rohres. Zur Abdichtung des Sensorelements im Gehäuse ist ein Graphitring vorgesehen, der seinerseits von Talkumpulver umgeben ist.

In der US 3,960,693 ist ein in ein Gehäuse eingebrachtes rohrförmiges Sensorelement beschrieben, das durch mindestens einen Ring im Gehäuse abgedichtet ist. Der Ring hat einen rechteckigen bzw. runden Querschnitt und besteht aus einem weichen Material, beispielsweise aus Nickel.

### Vorteile der Erfindung

Der erfindungsgemäße Meßfühler mit den kennzeichnenden Merkmalen des unabhängigen Anspruchs hat den Vorteil, daß das Sensorelement während der Montage im Gehäuse verdrehsicher fixiert ist. Dadurch ist eine sichere Kontaktierung der Elektrodenanschlüsse, insbesondere bei der Montage von potentialfreien Meßfühlern, möglich. Hierzu wird das Sensorelement im Gehäuse durch einen Dichtring abgedichtet, an den ein Federelement angeformt ist. Das Federelement hält das Sensorelement im Gehäuse unter mechanischer Vorspannung verdrehsicher.

Durch die in den Unteransprüchen aufgeführten Maßnahmen sind vorteilhafte Weiterbildungen des erfindungsgemäßen Meßfühlers möglich.

### Zeichnung

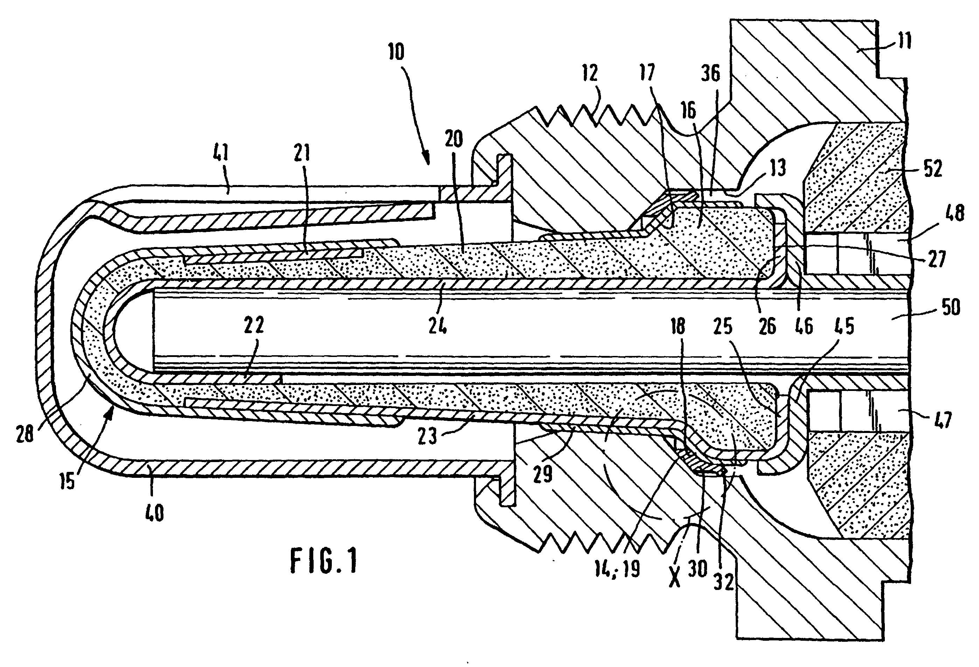

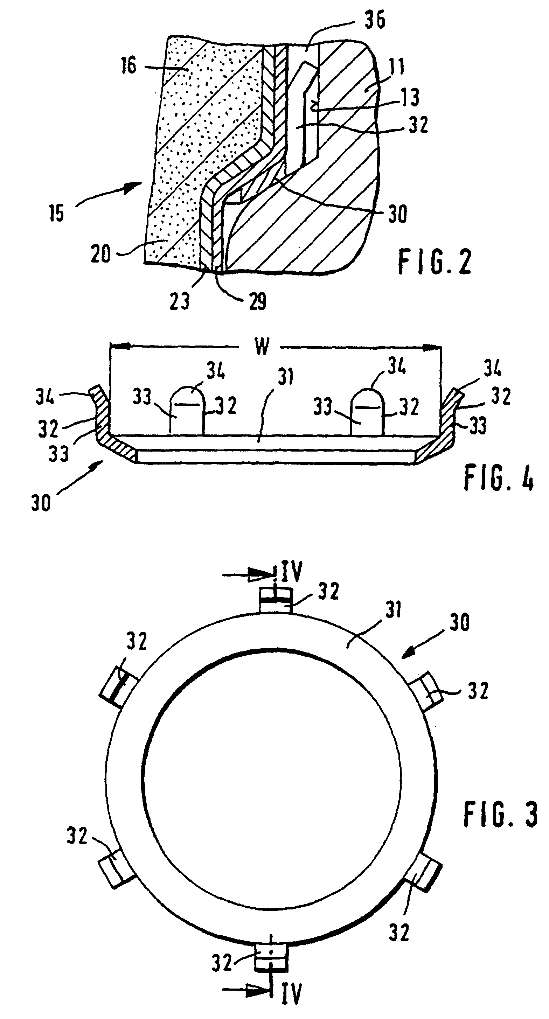

Ein Ausführungsbeispiel der Erfindung ist in der Zeichnung dargestellt und in der nachfolgenden Beschreibung näher erläutert. Es zeigen Figur 1 einen Längsschnitt durch den abgasseitigen Teil eines Meßfühlers, Figur 2 einen vergrößerten Ausschnitt der Dichtzone X gemäß Figur 1, Figur 3 eine Draufsicht auf einen Dichtring und Figur 4 eine Schnittdarstellung entsprechend den Linien IV-IV in Figur 3.

### Ausführungsbeispiel

Der in Figur 1 dargestellte elektrochemische Meßfühler 10 hat ein metallisches Gehäuse 11, das an seiner Außenseite ein Gewinde 12 als Befestigungsmittel für den Einbau in ein nicht dargestelltes Meßgasrohr aufweist. Das Gehäuse 11 hat eine Längsbohrung 13 mit einem Dichtsitz 14, welcher einen metallischen Dichtring 30 trägt. Auf dem Dichtring 30 liegt ein Sensorelement 15 mit einer an einem wulstförmigen Kopf 16 ausgebildeten Schulter 17 auf. Am wulstförmigen Kopf 16 bildet sich zwischen dem Dichtring 30 und dem Sensorelement 15 eine sensorelementseitige Dichtfläche 18 aus. Die Längsbohrung 13 ist im Bereich des wulstförmigen Kopfes 16 derart ausgeführt, daß sich ein Spalt 36 zwischen dem wulstförmigen Kopf 16 des Sensorelements 15 und dem Gehäuse 11 ausbildet. Der Dichtsitz 14 bildet seinerseits eine gehäuseseitige Dichtfläche 19. Die sich am Dichtring 30 ausbildende Dichtzone X ist in Figur 2 vergrößert dargestellt.

Das Sensorelement 15 ist im vorliegenden Beispiel ein rohrförmiger Festelektrolytkörper 20, dessen meßgasseitiger Endabschnitt verschlossen ist. Auf der dem Meßgas ausgesetzten Außenseite ist auf dem Festelektrolytkörper 20 eine schichtförmige gasdurchlässige Meßelektrode 21 und auf der dem Innenraum zugewandten Seite eine einem Referenzgas, zum Beispiel Luft, ausgesetzte schiebtförmige und gasdurchlässige Referenzelektrode 22 angeordnet. Die Meßelektrode 21 wird mit einer Meßelektroden-Leiterbahn 23 zu einem ersten Elektrodenkontakt 25 und die Referenzelektrode 22 mit einer Referenzelektroden-Leiterbahn 24 zu einem zweiten Elektrodenkontakt 26 geführt. Die Elektrodenkontakte 25, 26 befinden sich jeweils auf einer vom offenen Ende des Festelektrolytkörpers 20 gebildeten Stirnfläche 27. über die Meßelektrode 21 und teilweise über die Meßelektroden-Leiterbahn 23 ist eine poröse Schutzschicht 28 gelegt. Die Elektroden 21, 22 und die Leiterbahnen 23, 24 sind vorteilhafterweise als Cermet-Schichten ausgeführt und mit dem Festelektrolytkörper 20 kogesintert.

Das meßgasseitig aus der Längsbohrung 13 des Gehäuses 11 herausragende Sensorelement 15 ist mit Abstand von einem Schutzrohr 40 umgeben, welches für den Ein- beziehungsweise Austritt des Meßgases Öffnungen 41 besitzt und am meßgasseitigen Ende des Gehäuses festgelegt ist. Der Innenraum des Sensorelements 15 ist beispielsweise durch ein stabförmiges Heizelement 50 ausgefüllt, welches nicht dargestellt meßgasfern arretiert und mit. Leitungsanschlüssen versehen ist.

Auf dem ersten Elektrodenkontakt 25 liegt ein erstes Kontaktteil 45 und auf dem zweiten Elektrodenkontakt 26 ein zweites Kontaktteil 46 auf. Die Kontaktteile 45, 46 sind so geformt, daß sie beispielsweise am rohrförmigen Heizelement 50 anliegen und mit einem Meßelektroden-Anschluß 47 und einem Referenzelektroden-Anschluß 48 kontaktiert sind. Die Anschlüsse 47 und 48 sind mit nicht dargestellten Anschlußkabeln verbunden und nach außen zu einem ebenfalls nicht dargestellten Meß- oder Steuergerät geführt.

In der Längsbohrung 13 des Gehäuses 11 ist ferner eine Isolierhülse 52 angeordnet, welche bevorzugt aus einem keramischen Material besteht. Mit Hilfe eines nicht dargestellten mechanischen Mittels wird die Isolierhülse 52 auf die Kontaktteile 45, 46 gedrückt, wodurch die elektrische Verbindung zu den Elektrodenkontakten 25, 26 hergestellt wird.

Bei dem in Figur 1 dargestellten Meßfühler handelt es sich um einen potentialfreien Meßfühler. Da der metallische Dichtring elektrisch leitend ist, ist die Meßelektroden-Leiterbahn 23 zumindest im Bereich der Dichtzone X mit einer elektrisch isolierenden Schicht 29 bedeckt (Figur 2). Anstelle einer isolierenden Schicht 29 kann auch ein aus mehreren Schichten bestehendes elektrisch isolierendes Schichtsystem vorgesehen werden. Im vorliegenden Ausführungsbeispiel ist die isolierende Schicht 29 um den Umfang des Festelektrolytkörpers 20 gezogen, der dem Gehäuse 11 benachbart ist. Es ist aber genauso denkbar, die isolierende Schicht 29 nur auf den Bereich der Kontaktstellen des Dichtrings 30 zu beschränken oder aber die isolierende Schicht 29 meßgasseitig bis hin zur Schutzschicht 28 auszudehnen. Die isolierende Schicht 29 ist beispielsweise eine plasmagespritzte Magnesium-Spinell-Schicht.

Zur verdrehsicheren Fixierung ist das Sensorelement 15 mittels des Dichtrings 30 im Gehäuse 11 unter mechanischer Vorspannung gehalten. Dazu hat der Dichtring 30 gemäß Figur 3 und 4 ein Ringelement 31, an dessen Umfang in axialer Richtung federnde Stege 32 mit einer lichten Weite W ausgebildet sind, die in den Spalt 36 zwischen dem wulstförmigen Kopf 16 und dem Gehäuse 11 hineinragen (Figur 2). Gemäß dem vorliegenden Ausführungsbeispiel sind sechs radial gleichmäßig angeordnete federnde Stege 32 vorgesehen. Die federnden Stege 32 besitzen jeweils ein unteres Teil 33 und ein nach außen abgewinkeltes Teil 34. Die lichte Weite W der unteren Teile 33 ist so gewählt, daß die unteren Teile 33 am wulstförmigen Kopf 16 mit einer Vorspannung aufsitzen. Andererseits ist der Spalt 36 so bemessen beziehungsweise die oberen Teile 34 so weit nach außen abgewinkelt, daß die federnden Stege 32 sich an der Innenwand der Längsbohrung 13 abstützen. Dadurch ist gewährleistet, daß das Sensorelement 15 mittels des Dichtrings 30 in der Längsbohrung 13 des Gehäuses 11 mechanisch vorgespannt gehalten wird (Figur 2). Die ausgeübte Vorspannkraft hält das Sensorelement 15 im Gehäuse 11, so daß es bis zu einer bestimmten Verdrehkraft verdrehsicher im Gehäuse 11 fixiert wird. Diese verdrehsichere Fixierung dient dazu, um das Sensorelement während der Montage in der vorgesehenen radialen Orientierung zu halten.

Der Dichtring 30 ist im vorliegenden Ausführungsbeispiel aus Cr-Ni-Stahl mit einer beidseitig aufgebrachten duktilen Schicht aus Ni oder Cu ausgeführt. Es ist aber genauso denkbar, andere Materialien einzusetzen, die die Herstellung entsprechend federnd ausgebildeter Stege 32 erlauben und außerdem eine hinreichende Dichtheit gewährleisten. Der Dichtring 30 ist jedoch nicht auf den Einsatz bei potentialfreien Meßfühlern beschränkt.

## Patentansprüche

1. Elektrochemischer Messfühler zur Bestimmung des Sauerstoffgehaltes in Gasen, insbesondere zur Bestimmung des Sauerstoffgehaltes in Abgasen von Verbrennungsmotoren, mit einem in ein Gehäuse mit einem Dichtring eingesetzten Sensorelement, welches einen sauerstoffionenleitenden Festelektrolytkörper in Form eines einseitig geschlossenen Rohres aufweist, **dadurch gekennzeichnet, dass** mindestens ein am Dichtring (30) angeformtes Federelement (32) vorgesehen ist, das das Sensorelement (15) im Gehäuse (11) unter mechanischer Vorspannung verdrehsicher hält.

2. Messfühler nach Anspruch 1, **dadurch gekennzeichnet, dass** der Dichtring (30) ein Ringelement (31) besitzt, an dem radial gleichmäßig verteilt die Federelemente (32) angeformt sind.

3. Messfühler nach Anspruch 1 oder 2, **dadurch gekennzeichnet, dass** die Federelemente (32) jeweils mit einem unteren Teil (33) und einem nach außen abgewinkelten oberen Teil (34) ausgeführt sind und eine lichte Weite (W) derart aufweisen, dass die unteren Teile (33) mechanisch vorgespannt am Sensorelement (15) anliegen und die oberen Teile (34) sich mechanisch vorgespannt am Gehäuse (11) abstützen.

4. Messfühler nach einem der vorhergehenden Ansprüche, **dadurch gekennzeichnet, dass** der Dichtring (30) aus einem Cr-Ni-Stahl mit einer aufgebrachten duktilen Beschichtung aus Ni oder Cu besteht.

## Claims

1. Electrochemical measurement sensor for determining the oxygen content in gases, in particular for determining the oxygen content in exhaust gases from internal combustion engines, having a sensor element, which is inserted into a housing with a sealing ring and which has a solid electrolyte body which conducts oxygen ions and is in the form of a tube which is closed on one side, **characterized in that** at least one spring element (32), which holds the sensor element (15) under mechanical prestress in the housing (11) in such a manner that the element cannot turn, is moulded onto the sealing ring (30).

2. Measurement sensor according to Claim 1, **characterized in that** the sealing ring (30) has an annular element (31), onto which the spring elements (32) are moulded in an even radial distribution.

3. Measurement sensor according to Claim 1 or 2, **characterized in that** the spring elements (32) are each designed with a lower part (33) and an upper part (34) which is angled off towards the outside, and have a clear width (W) which is such that the lower parts (33) bear in a mechanically prestresed manner against the sensor element (15) and the upper parts (34) are supported in a mechanically prestressed manner against the housing (11).

4. Measurement sensor according to one of the preceding claims, **characterized in that** the sealing ring (30) consists of a Cr-Ni steel with an applied ductile coating of Ni or Cu.

## Revendications

1. Capteur de mesure électrochimique pour déterminer la teneur en oxygène dans des gaz, notamment dans les gaz d'échappement d'un moteur à combustion interne, comprenant un élément de capteur placé dans un boîtier avec un joint d'étanchéité, cet élément ayant un corps à électrolyte solide conducteur d'ions d'oxygène, sous la forme d'un tube fermé d'un côté,
**caractérisé en ce qu'**
un élément à ressort (32) formé au moins sur le joint d'étanchéité (30) maintient l'élément de capteur (15) dans le boîtier (11) de façon bloquée en rotation avec précontrainte mécanique.

2. Capteur de mesure selon la revendication 1,
**caractérisé en ce que**
le joint d'étanchéité (30) comporte un élément annulaire (31) sur lequel les éléments de ressort (32) sont formés avec une répartition radiale régulière.

3. Capteur de mesure selon l'une quelconque des revendications 1 ou 2,
**caractérisé en ce que**
les éléments de ressort (32) sont réalisés chaque fois avec une partie inférieure (33) et une partie supérieure (34) recourbée vers l'extérieur, et ont une largeur libre (W) telle que les parties inférieures (33) s'appliquent avec précontrainte mécanique contre l'élément de capteur (15), et que les parties supérieures (34) sont précontraintes mécaniquement en appui contre le boîtier (11).

4. Capteur de mesure selon l'une quelconque des revendications précédentes,
**caractérisé en ce que**
le joint d'étanchéité (30) est en acier au Cr-Ni avec un revêtement ductile en Ni ou Cu.
